(19) Europäisches Patentamt

European Patent Office

Office européen des brevets

(11) **EP 1 542 298 A1**

(12) **EUROPEAN PATENT APPLICATION**
published in accordance with Art. 158(3) EPC

(43) Date of publication:
**15.06.2005 Bulletin 2005/24**

(21) Application number: **03795255.3**

(22) Date of filing: **29.08.2003**

(51) Int Cl.7: **H01M 6/06**, H01M 4/52, H01M 4/42

(86) International application number:
**PCT/JP2003/011073**

(87) International publication number:
**WO 2004/025759 (25.03.2004 Gazette 2004/13)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.08.2002 JP 2002253469**

(71) Applicant: **Toshiba Battery Co., Ltd. Tokyo 140-0004 (JP)**

(72) Inventors:
• **MIYAMOTO, Shinichi**
  **Setagaya-ku, Tokyo 154-0004 (JP)**
• **MIYAMOTO, Kunihiko**
  **Edogawa-ku, Tokyo 134-0083 (JP)**
• **IRIE, Shuichiro**
  **Yokohama-shi, Kanagawa 232-0016 (JP)**

(74) Representative: **HOFFMANN EITLE**
  **Patent- und Rechtsanwälte**
  **Arabellastrasse 4**
  **81925 München (DE)**

(54) **NICKEL BASED COMPOUND POSITIVE ELECTRODE MATERIAL PRIMARY CELL**

(57)   According to the invention, a high capacity alkali primary battery excellent in high rate characteristics is obtained using a positive electrode active substance, wherein the particles of the nickel oxyhydroxide base compound as the positive electrode active substance has a surface coated with a higher oxide of cobalt and comprises zinc and cobalt separately or an eutectic crystal with zinc and cobalt, and a half-width of an X-ray diffraction peak at a diffraction angle at around 18° in an X-ray diffraction pattern of 0.4 to 0.48 obtained by using a CuKα line as an X-ray source.

A further excellent battery is obtained by using zinc containing a powder with a particle diameter of 75 μm or less in the range of 10% by mass or more and 20% by mass or less.

EP 1 542 298 A1

**Description**

Technical Field

The invention relates to a primary battery using a nickel-base material as a positive electrode active material. Specifically, the invention relates to a primary battery improved in its capacity and high rate characteristics.

Background Art

Alkali dry batteries are required to be applicable to uses requiring to be durable under ultra-heavy load or heavy load conditions in recent years in accordance with wide spreading of portable AV appliances such as notebook-type personal computers, CD players, MD players and liquid crystal televisions as well as mobile phones. Accordingly, the battery has been required to have an improved capacity. While voltage drops during large current discharge should be suppressed for enabling large current discharge for a long period of time, the voltage drop caused by discharge at a positive electrode largely depends on (1) proton diffusibility of the positive electrode itself such as manganese' dioxide and (2) diffusibility of reaction substances in the positive electrode. Accordingly, improvements of the primary battery based on these factors have been investigated.

Basic properties of the positive electrode active substance have been investigated for improving the factors as described above in conjunction with improvements of the method for manufacturing the positive electrode active substance. Since an increased surface area of the active substance in the positive electrode is able to improve diffusibility of the reaction substance, the positive electrode active substance has been attempted to have a small particle diameter while filling efficiency of the particles are improved.

It has been also investigated to increase the proportion of the positive electrode active substance in a cathode mix for allowing the alkali dry battery to have a high capacity. However, increasing the content of the positive electrode active substance inevitably decreases the content of a graphite powder in a conductive material contained in the cathode mix. Consequently, moldability and conductivity of the cathode mix are decreased while contact resistance to a cathode case is increased to cause a decrease of short circuit current and a decrease of heavy load characteristics.

Meanwhile, another example of an alkali battery excellent in highly rate discharge characteristics includes an alkali battery having a so-called inside-out structure in which a nickel hydroxide compound is used as a positive electrode active substance and zinc is used as a negative electrode active substance (for example, see Japanese Patent Application Laid-Open (JP-A) Nos. 2000-67910 and 2001-6665). Batteries that can comply with the requirements against the alkali primary battery as described above have been developed by using such positive electrode active substance excellent in high rate discharge characteristics. In these batteries, the cathode mix is prepared by adding an alkaline electrolyte solution to a nickel hydroxide base compound and graphite followed by forming into a hollow cylinder by press forming. The cathode mix is packed into a bottom-sealed cathode case together with a separator and a gel of a zinc negative electrode to construct a battery. An improvement of the discharge capacity has been attempted in the alkali battery using the nickel hydroxide compound by reducing the content of graphite that does not directly contribute to the discharge capacity. However, while the battery capacity and high efficiency discharge characteristics are excellent in the battery containing nickel oxyhydroxide compound as the cathode mix, the battery capacity and high rate discharge efficiency are still required to be improved in order to comply with spreading of portable appliances that require heavy load durability.

The object of the invention for solving the aforementioned problems is to provide a primary battery excellent in high capacity and high rate characteristics.

Disclosure of the Invention

A first aspect of the invention is to provide a primary battery containing a positive electrode material of a nickel base compound using particles of a nickel oxyhydroxide base compound as a positive electrode active substance. The particles of the nickel oxyhydroxide base compound have a surface coated with a higher oxide of cobalt and containing zinc and cobalt separately or an eutectic crystal with zinc and cobalt, and the particles of the nickel oxyhydroxide compound have a half-width of an X-ray diffraction peak in an X-ray diffraction pattern of 0.4 to 0.48 obtained by using a $CuK\alpha$ line as an X-ray source.

Preferably, the content of the cobalt higher oxide compound coated on the surface of the positive electrode active substance is 0.5% by mass or more and 20% by mass or less.

A second aspect of the invention is to provide a primary battery containing a positive electrode material of a nickel base compound using particles of a nickel oxyhydroxide base compound as a positive electrode active substance and zinc or an alloy of zinc as a negative electrode material. The particles of the nickel oxyhydroxide base compound have a surface coated with a higher oxide of cobalt and containing zinc and cobalt separately or an eutectic crystal with zinc and cobalt, the particles of the nickel oxyhydroxide base compound have a half-width of an X-ray diffraction peak in an X-ray diffraction pattern of 0.4 to 0.48 obtained by using a CuKα line as an X-ray source, and zinc or an alloy of zinc as the negative electrode material contains a powder with a particle diameter of 75 μm or less in the range of 10% by mass or more and 20% by mass or less.

Preferably, zinc or an alloy of zinc as the negative electrode material comprises a powder with a particle diameter of 75 μm or less in the range of 10% by mass or more and 20% by mass or less.

Brief Description of the Drawings

Fig. 1 is a cross section showing a principal construction of a zinc alkali battery according to an example of the invention.
Fig. 2 is a graph showing discharge capacities of positive electrode active substances having different half-widths with each other at discharge of 20 mAh.
Fig. 3 is a graph showing discharge capacities of positive electrode active substances having different half-widths with each other at discharge of 750 mAh.
Fig. 4 is a graph showing discharge capacities of positive electrode active substances having different half-widths with each other at discharge of 20 mAh.
Fig. 5 is a graph showing discharge capacities of positive electrode active substances having different half-widths with each other at discharge of 750 mAh.

Best Mode for Carrying Out the Invention

The function of the invention will be described hereinafter.

The inventors of the invention found, through intensive studies for solving the aforementioned problems, that the half-width of the diffraction peak around 18° in the X-ray diffraction pattern is correlated with the battery capacity in the nickel base positive electrode active substance. The following facts were found as a result of investigations with respect to the relation between the capacity of the battery and half-width in various samples of the positive electrode active substance.

The capacity the nickel oxyhydroxide is determined by the diffusion rate of protons in a crystal in most cases. The nickel oxyhydroxide crystal has a lamellar structure. Therefore, it is quite effective to expand the interlayer distance for facilitating diffusion of the proton since the proton is mainly diffused in the crystal using the interlayer space as a diffusion passageway. A most popular method for expanding the interlayer space is to form a eutectic crystal with different kinds of elements in the interlayer space. A distortion is introduced in the crystal without impairing crystallinity so much by forming an optimum amount of the eutectic crystal.

When the amount of the eutectic crystal with different kinds of elements is too much, the crystallinity is remarkably damaged or impurities are formed to interfere with diffusion of the proton. Increasing the amount of the eutectic crystal causes a substantial decrease of a capacity to fail in obtaining a desired capacity, while the effect of the eutectic crystal cannot be expressed when the amount of the eutectic crystal is too small.

The half-width of a diffraction angle of at around 18° in the X-ray diffraction pattern of nickel oxyhydroxide correlates to the interlayer distortion. A sufficient capacity cannot be obtained when the half-width is smaller than 0.40 since distortion enough for facilitating diffusion of the proton in the crystal is not introduced in the crystal. On the contrary, a desired capacity is hardly obtained when the half-width is larger than 0.48 due to poor crystallinity.

While it is needless to say that diffusion passageways for the proton should be sufficiently secure in high rate discharge, mobility of electrons is also important. A desired capacity cannot be obtained when electric resistance of the positive electrode active substance is large since the electrons are not smoothly donated and accepted between the surface of the active substance and conductive materials. Accordingly, it is important to coat the surface of the active substance with a conductive substance in advance for smooth donation and acceptance of the electrons between the surface of the active substance and conductive materials. Coating enables the surface resistance to be reduced to permit the electron to be smoothly donated and accepted between the surface of the active substance and conductive materials.

The particle diameter of zinc used in the negative electrode is also important for the capacity of the battery. A desired capacity cannot be obtained when the reaction rate at the negative electrode determines high rate discharge. Accordingly, the particle diameter of the negative electrode active substance is reduced in order to obtain a sufficient high rate capacity. Specifically, the high rate characteristics may be improved by controlling the proportion of particles with a particle diameter of 75 μm or less, which are the particles that pass through a 200 mesh sieve usually used for screening fine particles, to be 10% by mass or more.

However, the amount of hydrogen gas generated in the battery using such negative electrode increases when the proportion of the fine particles exceeds far above 20% by mass to increase the inner pressure of the battery.

The invention has been completed based on the discoveries as described above in the primary battery using the nickel base compound as the positive electrode active substance.

Best modes for carrying out the invention will be described in detail hereinafter.

[Battery structure]

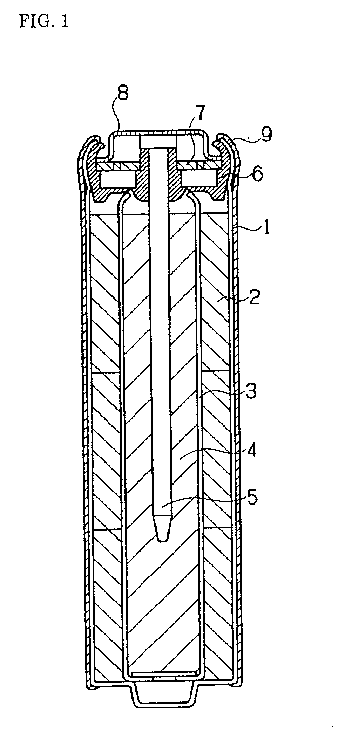

Detailed embodiments of the battery of the invention will be described hereinafter with reference drawings. Fig. 1 shows an example in which the invention is applied to a LR6 type (size AA) battery prescribed in JIS having a so-called inside-out structure (a structure in which the battery case is at a positive electrode side while a battery cover is at a negative electrode side).

In Fig. 1, the reference numeral 1 denotes a bottom-sealed metal case that serves as a positive electrode terminal, and a cathode mix 2 containing a hollow cylindrical positive electrode active substance is housed within the metal case. A gel of a lead negative electrode material 4 is filled in the hollow cylinder of the cathode mix 2 with interposition of a bottom-sealed cylindrical separator 3 composed of a nonwoven fabric. A negative electrode charger collector rod 5 made of a metal rod is inserted into the negative electrode material 4. One end of the negative electrode charger collector rod 5 is protruded out of the surface of the negative electrode material 4, and is in electrical continuity with a ring of a metal plate 7 and a metal seal plate 8 that serves as a negative electrode terminal. An insulation gasket 6 comprising a dual annular plastic resin is disposed on the inner surface of the metal case 1 and on an outer circumference of the protruded portion of the negative electrode charger collector rod 5 to electrically isolate them. The opening of the metal case 1 is caulked to be liquid-tight.

[Cathode mix]

The cathode mix of the invention comprises at least a positive electrode active substance, a carbon conductor as a conductivity-endowing material and a binder, and these cathode mix materials are usually used by being mixed and molded into a pellet. The blend ratio of these materials in the cathode mix is preferably in the range of 100: 10 to 15: 0.05 to 0.5 in the mass ratio among the cathode mix, carbon conductive material and binder.

While examples of the carbon conductive material available in the invention include known carbon materials such as graphite and carbon black, graphite is particularly preferable. Conductivity as well as electromotive force are decreased when the blend ratio of the carbon conductive material is lower than the range described above, while discharge capacity decreases when the blend ratio is larger than the range described above due to a restricted amount of the positive electrode active substance.

Examples of the binder available in the invention include polyolefin, polytetrafluoroethylene, polyvinylidene fluoride (PVdF), modified PVdF in which at least one of hydrogen and fluorine in PVdF is substituted with another substituent, vinylidene fluoride-propylene hexafluoride copolymers, and ternary copolymers of polyvinylidene fluoride-tetrafluoroethylene-propylene hexafluoride. Polyolefin is particularly preferable among them. The binder is added in the invention in order to prevent adhesivity of the cathode mix from being decreased or to prevent shape retainability of the cathode mix from being decreased. The binder is able to adhere the cathode mix using a smaller amount of it than graphite. Example of the polyolefin include polyethylene and polypropylene in the invention. The polyolefin is added in the cathode mix as granules having a preferable particle diameter range of 10 to 1000 µm.

While the amount of the binder suitable for use in the invention is as described above, the strength of the formed body becomes low when the amount of the binder is lower than the range described above to decrease the yield of the battery in the production process. When the amount of the binder exceeds the range described above, the amount of the positive electrode active substance is restricted to reduce the discharge capacity. Accordingly, the amount of the binder smaller than or exceeding the range above is not preferable.

Formability and conductivity of the cathode mix of the invention are improved by mixing an electrolyte solution in the process for forming the cathode mix. The discharge reaction in the positive electrode of the primary battery using nickel oxyhydroxide as the positive electrode active substance is represented by the following formula:

$$NiOOH + H_2O + e^- \rightarrow Ni(OH)_2 + OH^-$$

accordingly, an aqueous electrolyte solution is necessary in the battery using nickel oxyhydroxide as the positive electrode active substance.

[Positive electrode active substance]

Nickel oxyhydroxide is preferable as the nickel base compound positive electrode active substance of the invention.

The particles of nickel oxyhydroxide may be spherical or nearly spherical according to the method for producing the positive electrode active material of the invention. Such positive electrode active material having the spherical shape enables the filling density to be enhanced by compression forming, and is preferable for obtaining a high capacity battery when the active substance is used for the inside-out type battery. A forming density can be largely improved to enable a favorable packing ratio of 2.7 to 3.5 $g/cm^3$ to be attained by using the spherical crystal of nickel oxyhydroxide in the invention. The average particle diameter of the nickel compound particles used in the invention is preferably in the range of 1 to 50 $\mu m$, because the average particle diameter is suitable for high density filling by compression forming.

It is necessary to use zinc and cobalt separately or as an eutectic crystal in the nickel oxyhydroxide compound in the invention. This nickel oxyhydroxide eutectic crystal is advantageous in that crystal structure changes thereof may be small while an interlayer space favorable for proton diffusion can be readily obtained. In particular, since crystallinity of nickel oxyhydroxide can be improved by forming an eutectic crystal with zinc, swelling, or volume changes, of the crystal can be suppressed in an oxidation-reduction reaction to afford a great benefit for designing a battery using a small volume of the electrolyte solution. While auto-discharge is suppressed by dissolving zinc oxide in the electrolyte solution to its saturation in a nickel zinc battery comprising a combination of a nickel oxyhydroxide electrode with a zinc electrode, the effect is reduced when nickel oxyhydroxide is amorphous because zinc ions in the electrolyte solution are absorbed in the electrode during storage of the battery. However, this phenomenon may be avoided by using nickel oxyhydroxide doped with zinc at an initial stage. Discharge efficiency of nickel oxyhydroxide may be also improved by forming an eutectic crystal with cobalt. Auto-discharge at the positive electrode may be improved by forming an eutectic crystal containing zinc and cobalt together since oxygen overvoltage can be increased.

The amount of zinc or cobalt for forming the eutectic crystal with nickel oxyhydroxide is preferably in the range of 1 to 10%, particularly in the range of 3 to 5%. A positive electrode active substance with a half width of the diffraction peak at around a diffraction angle of 18° cannot be obtained when the amount of zinc or cobalt is out of the range described above.

It is preferable for securing electronic conductivity between the nickel oxyhydroxide particles to form a composite oxyhydroxide comprising a more conductive higher cobalt oxide compound coated on the surface of nickel hydroxide. Examples of starting materials of the cobalt compound coated on the surface include cobalt hydroxide (Co$(OH)_2$), cobalt monoxide (CoO) and dicobalt trioxide ($Co_2O_3$). These compounds can be converted into high conductivity higher cobalt oxide such as cobalt oxyhydroxide (CoOOH) and tricobalt tetroxide ($Co_3O_4$) by further oxidizing the cobalt compound.

Adding a compound of Y, Er, Yb or Ca to the positive electrode active substance of nickel oxide permits a capacity retaining rate during storage to be improved. Examples of the aforementioned compounds available in the invention include metal oxides such as $Y_2O_3$, $Er_2O_3$ and $Yb_2O_3$, and metal fluorides such as $CaF_2$. These metal oxides and metal fluorides may be used in the range of 0.1 to 2% by mass relative to the amount of the nickel hydroxide as the positive electrode active substance. A storage characteristic improvement cannot be obtained when the blend ratio of the metal oxide or metal fluoride is lower than the range above, while an amount of blend exceeding the range above is not preferable for increasing the capacity since the relative amount of the positive electrode active substance decreases.

(Method for producing positive electrode active substance: method for producing spherical nickel oxyhydroxide)

Nickel oxyhydroxide particles are produced by the following steps in the invention: (1) production of nickel hydroxide, (2) production of nickel hydroxide coated with a cobalt compound, and (3) production of nickel oxyhydroxide coated with a cobalt compound.

Each step will be sequentially described below.

(1) Production of nickel hydroxide

Nickel hydroxide is formed by neutralizing with an alkali after dissolving metallic nickel in an acid. while the acid used in the step includes an inorganic strong acid such as nitric acid and sulfuric acid, sulfuric acid is preferably used in the battery from the view point of suppressing auto-discharge. The Nickel powder may be dissolved in the strong acid such as sulfuric acid or nitric acid by adding the powder in the strong acid with stirring. The aqueous inorganic strong acid solution of nickel may be neutralized by mixing with an aqueous strong alkali solution such as an aqueous sodium hydroxide solution. It is important in this step to suppress nickel hydroxide crystals from being formed. Desired spherical crystals may be obtained in the invention by slowly mixing the aqueous inorganic acid solution of nickel with the aqueous inorganic alkali solution with vigorous stirring while the pH is maintained around 11. This step permits spherical crystals with an average particle diameter of about 10 µm to be obtained.

It is favorable in this step to use an ammonium salt together in addition to a strong alkali such as sodium hydroxide for maintaining the pH around 11. Using the ammonium salt together permits regularly shaped spherical particles having a more uniform particle diameter to be obtained. The temperature in this neutralization step is preferably in the range of 30 to 40°C. A temperature range below the range above is not preferable from the view point of supplying crystal components. A temperature range exceeding the range above is also not preferable from the view point of costs for the safety facility and workability since strong acid and alkali solutions are used. When zinc and cobalt are used as eutectic crystal components in nickel oxyhydroxide of the invention, zinc, cobalt, or a compound of zinc and cobalt, is dissolved in the strong acid solution simultaneously with metallic nickel.

(2) Production of nickel hydroxide coated with a cobalt compound

The nickel hydroxide crystal obtained in the step above is coated with cobalt hydroxide. Coating with cobalt hydroxide comprises the steps of: heating 5 to 7 parts by mass of a cobalt compound with an average particle diameter of 1 to 5 µm relative to 100 parts by mass of a spherical nickel hydroxide crystal with an average particle diameter of 10 µm at 60 to 150°C with a heating means such as a microwave in a gas atmosphere containing oxygen; spraying an aqueous alkali solution of sodium hydroxide in a proportion of 5 to 20 parts by mass with stirring; allowing the cobalt hydroxide compound that has been once dissolved in the aqueous alkali solution to re-precipitate as $Co(OH)_2$ on the surface of the nickel hydroxide particles as a coating film; and transferring cobalt hydroxide into a high conductivity higher cobalt compound such as $CoOOH$ and $Co_3O_4$. Nickel hydroxide particles coated with the high conductivity spherical cobalt compound are obtained by the steps above.

Cobalt hydroxide with a specific surface area of 2.5 to 30 $m^2/g$ is preferably used as cobalt particles or cobalt compound particles used in the process above. A sufficient contact area between nickel hydroxide and cobalt hydroxide is ensured by employing the cobalt particles or cobalt compound particles in the range as described above to result in an improvement of the positive electrode efficiency. The methods for producing such cathode mix are described in JA-A Nos. 10-233229, 10-275620 and 10-188969, and these methods for producing the cathode mix are also employed in the invention.

The process for producing the nickel hydroxide compound coated with cobalt will be described in detail hereinafter.

At first, given quantities of nickel hydroxide particles and cobalt hydroxide particles are placed in a mixer for mixing with stirring.

A heating device is allowed to be actuated in the invention while the atmosphere in the mixer contains oxygen such as air. The temperature of the mixture under stirring is controlled at a given temperature with heat treatment, and an aqueous alkaline solution at a given concentration is simultaneously supplied from a nozzle to mix it by operating the mixer.

The nickel hydroxide particles and cobalt compound particles are gradually mixed uniformly in this step, the concomitantly supplied aqueous alkaline solution adheres on the surface of the mixed particles, and a reaction field is formed on the surface of the nickel hydroxide particles where the aqueous alkali solution, the cobalt compound particles and oxygen exist together. Consequently, the cobalt compound particles are converted into a higher oxide with which the nickel hydroxide particles are coated.

Any one of metallic cobalt particles, cobalt hydroxide particles, cobalt trioxide particles, cobalt tetraoxide particles and cobalt monoxide particles may be used alone as the cobalt compound particles, or these compounds may be used as a mixture of at least two of them. The content of the cobalt compound particles in the particle system is preferably set to be within the range of 0.5 to 20% by mass. A high efficiency of use of the cobalt compound particles cannot be enhanced when the content is less than 0.5% by mass since a conductive matrix is insufficiently formed on the surface of the nickel hydroxide particles. When the content is larger than 20% by mass, a relative proportion of the nickel hydroxide particles is decreased to reduce the discharge capacity.

Examples of the aqueous alkali solution include an aqueous sodium hydroxide solution or an aqueous potassium hydroxide solution used alone, or a mixture thereof, or a mixture of the aforementioned system with an aqueous lithium hydroxide solution. The concentration of the aqueous alkali solution is preferably set in the range of 1 to 14 N. Solubility of the cobalt compound particles contained in the mixture is lowered when the concentration is lower than 1 N, and efficiency of use of the active substance is not sufficiently improved due to insufficient formation of the conductive matrix. When the concentration is higher than 14 N, the aqueous alkaline solution cannot permeate deep into the particle system since the viscosity of the aqueous alkaline solution is too high to fail in sufficiently dissolving the cobalt compound particles.

The amount of use of the alkaline solution is preferably set to be 5 to 20 parts by mass relative to 100 parts by mass of the particle system. The total amount of the cobalt compound particles in the particle system are hardly dissolved when the amount of use is less than 5 parts by mass, and the efficiency of use of the active substance obtained is not improved while the capacity recovery rate of the battery produced by using the particle system after storage is not so high. When the amount of use is larger than 20 parts by mass, the particle system is granulated. Accordingly, the preferable amount of use is 10 to 15 parts by mass relative to 100 parts by mass of the particle system.

(3) Production of nickel oxyhydroxide coated with cobalt compound

The nickel hydroxide coated with the cobalt compound is oxidized to cobalt oxyhydroxide by adding water to form a slurry followed by oxidation by adding an oxidizing agent. The proportion of water is 5 to 30 parts by mass relative to 100 parts by mass of the nickel hydroxide particles coated with the cobalt compound. The oxidizing agent used in the invention is sodium hypochlorite. The concentration of the aqueous sodium hypochlorite used is in the range of 5 to 15%, more preferably 10 to 12%. A concentration of the oxidizing agent of lower then the range above is unfavorable for oxidizing nickel hydroxide coated with the cobalt compound, while nickel hydroxide coated with the cobalt compound can be unfavorably oxidized to a stable oxidization state of nickel oxyhydroxide coated with the cobalt compound when the concentration of the oxidizing agent is higher than the range above since the solution of the oxidizing agent is quite unstable to air, heat and light. The amount of the oxidizing agent added to the slurry of the cobalt hydroxide coated with the cobalt compound is preferably in the range of 105 to 120 equivalent relative to nickel hydroxide. The range above is able to reliably convert nickel hydroxide into nickel oxyhydroxide.

Nickel oxyhydroxide having the X-ray diffraction peak according to the invention can be produced by producing the positive electrode active substance by the production method according to the invention.

(Negative electrode material)

The negative electrode material used in the invention mainly contains zinc or a zinc alloy as a negative electrode active substance including a zinc gel used in a known manganese dioxide-zinc-primary battery. This negative electrode material is desirably a gel for the convenience of handling. The negative electrode may be readily gelled by dispersing a zinc material such as zinc or a zinc alloy as the negative electrode active substance in a gelled electrolyte solution.

While the zinc material used in the invention may be pure zinc, a zinc alloy known as a mercury-free zinc alloy containing no mercury and lead is available. Specifically, a zinc alloy containing 0.06% by mass of indium, 0.014% by mass of bismuth and 0.0035% by mass of aluminum is desirable since the alloy has an effect for suppressing hydrogen gas from generating. Indium and bismuth is particularly desirable for improving discharge characteristics. Using such zinc alloy permits an autolysis rate in an alkaline electrolyte solution to be retarded to enable accidents such as leakage can be prevented from occurring when a hermetically sealed battery product is produced.

It is preferable to form the zinc material into a powder having a large surface area in order to comply with large discharge current. The zinc material according to the embodiment of the invention preferably contains components having a particle diameter of 75 μm or less in a proportion of 10% by mass or more and 20% by mass or less. The battery capacity cannot be expected to be improved enough for high rate discharge when the proportion of the component having a particle diameter of 75 μm or less is less than 10% by mass, while a proportion of exceeding 20% by mass of the component having a particle diameter of 75 μm or less is not preferable since generation of a gas is hardly suppressed to cause a deterioration of the battery characteristics. Accordingly, the range of the content of the component having a particle diameter of 75 μm or less is preferably 15% by mass or less.

Examples of thickening agents used in the invention include polyvinyl alcohol, polyacrylic acid salts, CMC and alginic acid. Sodium polyacrylate is particularly preferable since it is excellent in the water absorption with an aqueous strong alkaline solution.

[Electrolyte solution]

The electrolyte solution preferably used in the invention is an aqueous solution using an alkali salt such as potassium hydroxide, sodium hydroxide and lithium hydroxide as a solute, and potassium hydroxide is preferably used. While the electrolyte solution is prepared by dissolving the alkali salt such as potassium hydroxide in water, it is desirable to add a zinc compound to the electrolyte solution. While such zinc compound include zinc oxide and zinc hydroxide, zinc oxide is particularly preferable.

The aqueous alkali solution containing at least the zinc compound is used as the electrolyte solution because autolysis of the zinc compound in the aqueous alkali solution is remarkably small as compared with in acidic solutions. In addition, autolysis of the zinc compound in the aqueous alkaline solution may be further suppressed by permitting zinc ions to exist in advance by dissolving the zinc compound, for example zinc oxide, in the electrolyte solution.

Examples

The invention will be described with reference to examples and comparative examples. However, the invention is not restricted to the following examples, and various modifications are possible within the scope not departing from the spirit of the invention.

[Test Example 1]

(Production of positive electrode active substance)

Twelve kinds of nickel oxyhydroxide were prepared by changing the amount of zinc and cobalt forming an eutectic crystal. In a reaction vessel, 2 M of an aqueous nickel sulfate solution, 0.158 M of an aqueous zinc sulfate solution, 0.035 M of an aqueous cobalt sulfate solution were added. An aqueous ammonia solution (25%, 8% by volume) was supplied at a constant rate, and an aqueous sodium hydroxide solution (6.5 M) was continuously supplied while the pH was adjusted at 11.5 to 11.9 with a pH controller. After stabilizing a slurry by allowing the mixture to stay for 1 day, the slurry was collected by overflow. The temperature was maintained at 37°C during this process. The slurry obtained was repeatedly dehydrated and washed with water, and the process was completed by drying the slurry when the pH of washing water reached 7 to 8.

The particles thus obtained were confirmed to be a nickel hydroxide crystal forming an eutectic crystal with Zn and Co by powder X-ray diffraction (it was also confirmed that no peak of Zn and Co compounds appear). It was also confirmed by quantitative analysis by an atomic absorption method that Zn and Co form the eutectic crystal with nickel hydroxide.

Subsequently, 7 parts by mass of $Co(OH)_2$ was added to 100 parts by mass of nickel hydroxide particles forming the eutectic crystal as described above in an atmospheric environment, and 15 parts by mass of 10 N aqueous NaOH solution was sprayed in the mixture with stirring.

Composite nickel hydroxide particles having a higher oxide of cobalt on the surface were prepared by microwave heating, and this system was further oxidized by adding sodium hypochlorite. Composite nickel oxyhydroxide comprising cobalt higher oxide was prepared after washing with water and drying. The substance obtained was confirmed to be composite nickel oxyhydroxide particles by XRD identification, and by confirming that almost all Ni was converted into trivalent Ni by back titration with iron (II) ammonium sulfate/potassium permanganate. This composite nickel oxyhydroxide was confirmed by laser method to have 10 μm of D50 in particle diameter distribution having an almost Gaussian distribution curve in the range of 1 to 20 μm. The particles were confirmed to be an aggregate of spherical or nearly spherical particles by an observation under a scanning electron microscope.

(Calculation of half width)

The half width was calculated at a half level of the diffraction peak intensity of each of the 12 kinds of the active substance powder obtained above at around a diffraction angle of 18° using a powder X-ray diffraction spectrometer. The half width of each active substance is shown in Table 1

TABLE 1

| Sample No. of Active Substance | Half width | Discharge Capacity at 20 mA | Discharge Capacity at 750 mA |
|---|---|---|---|
| Sample 1 | 0.387 | 1974 | 1299 |
| Sample 2 | 0.398 | 2024 | 1323 |
| Sample 3 | 0.406 | 2110 | 1403 |
| Sample 4 | 0.413 | 2114 | 1412 |
| Sample 5 | 0.421 | 2134 | 1432 |
| Sample 6 | 0.433 | 2146 | 1436 |
| Sample 7 | 0.453 | 2138 | 1428 |
| Sample 8 | 0.457 | 2144 | 1443 |
| Sample 9 | 0.470 | 2136 | 1422 |
| Sample 10 | 0.474 | 2142 | 1409 |

TABLE 1   (continued)

| Sample No. of Active Substance | Half width | Discharge Capacity at 20 mA | Discharge Capacity at 750 mA |
|---|---|---|---|
| Sample 11 | 0.482 | 2056 | 1381 |
| Sample 12 | 0.485 | 2036 | 1372 |

(Preparation of negative electrode)

The following gel of an anode mix was formed by mixing zinc alloy particles with a KOH electrolyte solution, where the zinc alloy particles comprise a mercury and lead-free zinc alloy for a negative electrode of a known manganese dioxide-zinc primary battery with a proportion of particles having a particle diameter of 75 μm or less of 15% by mass relative to the total amount of the particles. The composition of the zinc gel for the anode mix was as follows:

Zinc : KOH electrolyte solution = 100:55 (mass ratio)

An aqueous 12 N KOH solution was used as the electrolyte solution. The density of the zinc gel was 2.70 g/cm$^3$.

(Production of battery)

Graphite (8 parts by mass) as a conductive agent was added to 100 parts by mass of the nickel oxyhydroxide powder prepared as described above. Then, 0.1 parts by mass of polyethylene particles as a binder were added to the mixture followed by stirring at a rotation speed of 300 rpm for 10 minutes in a dry state. Subsequently, 5 parts by mass of an aqueous potassium hydroxide solution as a kneading liquid with a concentration of 40% by mass was added with stirring at a rotation speed of 300 rpm for 10 minutes in a wet state. The mixture was further stirred at a rotation speed of 600 rpm for 10 minutes for homogeneous mixing to form a stirred mix. This stirred mix was compressed at a compression pressure of $1.96 \times 10^3$ MPa (200 kg/mm$^2$) to a prepare lamellar powder. A granular mix was prepared by pulverizing the lamellar plate using a classifier. The powder was formed into a cathode mix having a given weight and size.
A separator was disposed within a hollow space of the molded cathode mix, and the gel of the anode mix was injected into the hollow space of the cathode mix.
Twelve kinds of zinc alkali batteries of LR6 type (size AA) prescribed in JIS as shown in Fig. 1 were thus assembled.

(Evaluation of battery)

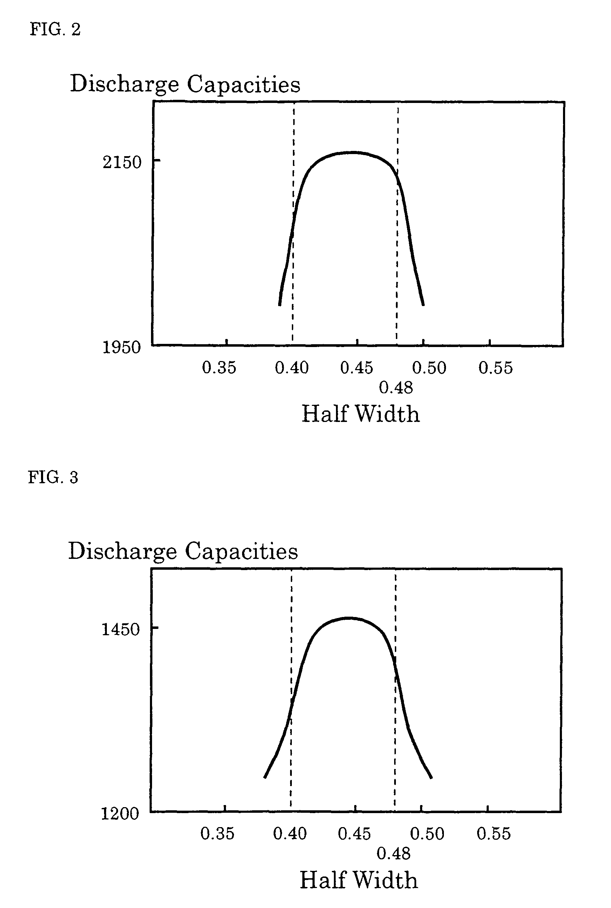

After allowing the battery obtained as described above to stand for 3 hours in a room kept at a room temperature of 20°C, it was discharged at a constant current of 20 mA until the discharge terminating voltage of 0.8 V to measure the capacity of the battery. The results are shown in Table 1 and Fig. 2. Fig. 2 shows the capacity of the battery discharged at a current of 20 mA, where the battery was produced using zinc particles as the negative electrode in which zinc particles with a particle diameter of 75 μm or less account for 15% of total zinc particles.
High rate discharge was evaluated by measuring the capacity by discharging until the terminating voltage is 0.8 V at a constant current of 750 mA after allowing the battery to stand in a room kept at a room temperature of 20°C for 3 hours. The results are shown in Table 1 and Fig. 3. Fig. 3 shows the capacity of the battery after high rate discharge of the battery as shown in Fig. 2, which was produced using zinc particles in which zinc particles with a particle diameter of 75 μm or less account for 15% of total zinc particles.

[Test Example 2]

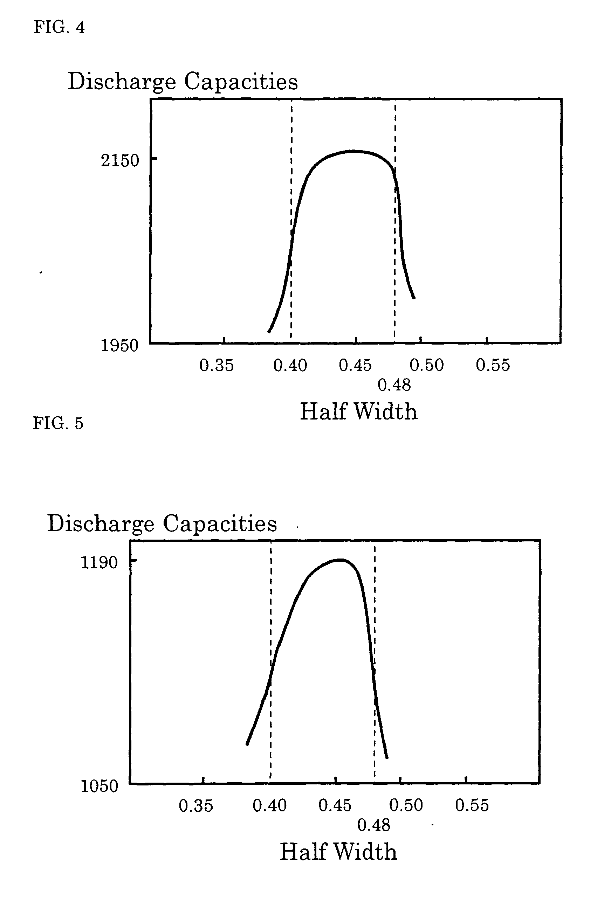

Twelve kinds of zinc alkali batteries of LR6 type (size AA) prescribed in JIS were assembled by the same method as in Test Example 1, except that a gel of the negative electrode using zinc alloy particles, in which the proportion of particles with a particle diameter of 75 μm or less accounts for 7% by mass, were used. These batteries were evaluated by the same method as described above.
The results are shown in Table 2 and Figs. 4 and 5. Fig. 4 shows the capacity of a battery using zinc particles comprising less than 10% of particles having a particle diameter of 75 μm or less of the total particles. Fig. 5 shows the capacity of a battery using zinc particles comprising less than 10% of particles having a particle diameter of 75 μm or less of the total particles as shown in Fig. 4.

TABLE 2

| Sample No. of Active Substance | Discharge Capacity at 20 mA | Discharge Capacity at 750 mA |
|---|---|---|
| Sample 1 | 1963 | 1080 |
| Sample 2 | 2019 | 1104 |
| Sample 3 | 2077 | 1134 |
| Sample 4 | 2088 | 1113 |
| Sample 5 | 2142 | 1142 |
| Sample 6 | 2146 | 1174 |
| Sample 7 | 2133 | 1154 |
| Sample 8 | 2137 | 1193 |
| Sample 9 | 2147 | 1157 |
| Sample 10 | 2140 | 1130 |
| Sample 11 | 2049 | 1178 |
| Sample 12 | 2024 | 1077 |

(Results)

The results in Test Examples 1 and 2, and in Figs. 2 and 4 clearly show that the discharge capacity decreases with the increase of the half width, and shows a constant discharge capacity at the half width range of 0.42 to 0.47, when the zinc particles as the negative electrode material within the range of the invention were used in the discharge evaluation at a current intensity of 20 mA. The discharge capacity decreases as the half width is increased. These results indicate that, while a large discharge capacity cannot be obtained in the region having a smaller half width since diffusion of protons is not facilitated due to a small amount of distortion in the crystal of nickel oxyhydroxide, the discharge capacity decreases when the half width is larger since diffusion of protons are blocked due to an increased proportion of elements in the eutectic crystal that are not responsible for discharge. Accordingly, batteries having improved discharge capacity at a current of 20 mA can be obtained using an active substance having a half width in the range of 0.4 to 0.48, particularly in the range of 0.4 to 0.475. It was also shown that the discharge capacity decreases when the average particle diameter of the zinc particles is larger as compared with the results of the invention in which the positive electrode active substance in the range of the invention is used, as is evident from the example using the zinc particles out of the range of the invention in Fig. 4.

Figs. 3 and 5 show the discharge capacity when discharged at a current intensity of 750 mA. The difference of the particle diameter of the negative electrode largely affects in high rate discharge rather then the difference of the positive electrode active substance does. Diffusion of protons is important in discharge at a current intensity of 750 mA, since protons in the positive electrode active substance are required to diffuse more rapidly than in discharge at a current intensity of 20 mA. Consequently, the capacity of the battery having a small half width decreases since the capacity is determined by the diffusion rate of protons. However, the capacity of the battery is also lowered when the half width is larger due to poor crystallinity of the positive electrode active substance or by the effect of impurities. Therefore, the capacity at high rate discharge also depends on the half width of the positive electrode active substance when the same negative electrode active substance is used. On the other hand, since the discharge capacity is determined by the reaction rate at the negative electrode active substance, a higher capacity may be obtained when the reaction area increases by adding the negative electrode active substance containing 10% or more of the particles with a particle diameter of 75 $\mu$m.

[Test Example 3]

The battery was produced by the same method as in Test Example 1, except that sample 7 in Test Example 1 was used as the positive electrode active substance, and the gel of the negative electrode containing the zinc alloy particles with a particle diameter of 75 $\mu$m or less in the proportion shown in Table 3 was used as the negative electrode.

The capacity at high rate discharge and gas generation after the use of the battery of these batteries were inspected. The results are shown in Table 3. The results of gas leakage show the number of the batteries of 10 test batteries causing gas leakage.

TABLE 3

| | Content of Zinc Alloy Particles with Particle Diameter of 75 μm or less | High rate Discharge Capacity | Gas Leakage (Number of Batteries of 10 Batteries) |
|---|---|---|---|
| Battery A | 8% by mass | 1170 | 0 |
| Battery B | 10% by mass | 1436 | 0 |
| Battery C | 13% by mass | 1439 | 0 |
| Battery D | 15% by mass | 1444 | 0 |
| Battery E | 19% by mass | 1438 | 1 |
| Battery F | 20% by mass | 1440 | 1 |
| Battery G | 22% by mass | 1431 | 8 |

It was revealed that the inner pressure of the battery increases due to increment of hydrogen gas generation to rapidly increase the incidence of gas leakage from the battery when the zinc alloy particles comprising more than 20% by mass of the particles with a particle diameter of 75 μm or less are used as the negative electrode. Accordingly, it was shown that the zinc alloy particles in the negative electrode comprise the particles with a particle diameter of 75 μm or less in the range of 10 to 20% by mass.

[Test Example 4]

The battery was produced by the same method as in Test Example 1, except that particles of a nickel oxyhydroxide base compound with a half width of 0.45 was used with cobalt higher oxide coated on the surface thereof in an amount shown in Table 4.

The capacity of the battery obtained by discharging at a current intensity of 750 mA is shown in TABLE 4

TABLE 4

| Sample No. of Active Substance | Amount of Coated Co (% by Mass) | Discharge Capacity at 759 mA (Utilization Ratio 65%) (mAh) |
|---|---|---|
| Sample 13 | 0.0 | 1009 |
| Sample 14 | 0.4 | 1012 |
| Sample 15 | 0.6 | 1154 |
| Sample 16 | 0.9 | 1165 |
| Sample 17 | 2.1 | 1189 |
| Sample 18 | 3.6 | 1172 |
| Sample 19 | 5.8 | 1161 |
| Sample 20 | 8.9 | 1145 |
| Sample 21 | 10.9 | 1138 |
| Sample 22 | 12.3 | 1131 |
| Sample 23 | 15.0 | 1114 |
| Sample 24 | 17.6 | 1091 |
| Sample 25 | 19.4 | 1080 |
| Sample 26 | 21.4 | 1020 |

As shown in Table 4, it was revealed that the discharge capacity is excellent with the amount of coated Co in the range of 0.5 to 20.0% by mass. More preferable amount is in the range of 0.6 to 15.0% by mass, and further preferable amount is in the range of 0.6 to 3.6% by mass.

Industrial Applicability

The invention provides a high capacity primary battery having excellent discharge characteristics at high rate discharge.

**Claims**

1.  A primary battery comprising a positive electrode material of a nickel base compound using particles of a nickel oxyhydroxide base compound as a positive electrode active substance,
        the particles of the nickel oxyhydroxide base compound having a surface coated with a higher oxide of cobalt and comprising zinc and cobalt separately or an eutectic crystal with zinc and cobalt,
        the particles of the nickel oxyhydroxide compound having a half-width of an X-ray diffraction peak in an X-ray diffraction pattern of 0.4 to 0.48 obtained by using a CuKα line as an X-ray source.

2.  The primary battery comprising the positive electrode material of the nickel base compound according to Claim 1, wherein the content of the cobalt higher oxide compound coated on the surface of the positive electrode active substance is 0.5% by mass or more and 20% by mass or less.

3.  A primary battery comprising a positive electrode material of a nickel base compound using particles of a nickel oxyhydroxide base compound as a positive electrode active substance and zinc or an alloy of zinc as a negative electrode material,
        the particles of the nickel oxyhydroxide base compound having a surface coated with a higher oxide of cobalt and comprising zinc and cobalt separately or an eutectic crystal with zinc and cobalt,
        the particles of the nickel oxyhydroxide base compound having a half-width of an X-ray diffraction peak in an X-ray diffraction pattern of 0.4 to 0.48 obtained by using a CuKα line as an X-ray source,
        the zinc or an alloy of zinc as the negative electrode material comprising a powder with a particle diameter of 75 μm or less in the range of 10% by mass or more and 20% by mass or less.

4.  The primary battery comprising the positive electrode material of the nickel base compound according to Claim 3, wherein zinc or an alloy of zinc as the negative electrode material comprises a powder with a particle diameter of 75 μm or less in the range of 10% by mass or more and 20% by mass or less.

FIG. 1

FIG. 2

**Discharge Capacities**

0.48

Half Width

FIG. 3

**Discharge Capacities**

0.48

Half Width

FIG. 4

Discharge Capacities

FIG. 5

Discharge Capacities

## INTERNATIONAL SEARCH REPORT

| | International application No. |
| --- | --- |
| | PCT/JP03/11073 |

**A. CLASSIFICATION OF SUBJECT MATTER**
Int.Cl$^7$ H01M6/06, H01M4/52, H01M4/42

According to International Patent Classification (IPC) or to both national classification and IPC

**B. FIELDS SEARCHED**

Minimum documentation searched (classification system followed by classification symbols)
Int.Cl$^7$ H01M6/06, H01M4/52, H01M4/42

Documentation searched other than minimum documentation to the extent that such documents are included in the fields searched

| | | | |
| --- | --- | --- | --- |
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-83599 A (Sony Corp.),<br>22 March, 2002 (22.03.02),<br>Full text<br>(Family: none) | 1-4 |
| P,A | JP 2003-17077 A (Toshiba Battery Co., Ltd.),<br>17 January, 2003 (17.01.03),<br>Full text<br>(Family: none) | 1-4 |
| P,A | JP 2003-17079 A (Toshiba Battery Co., Ltd.),<br>17 January, 2003 (17.01.03),<br>Full text<br>(Family: none) | 1-4 |

☐ Further documents are listed in the continuation of Box C.   ☐ See patent family annex.

| | |
| --- | --- |
| *   Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>   06 October 2003 (06.10.03) | Date of mailing of the international search report<br>   21 October, 2003 (21.10.03) |
| Name and mailing address of the ISA/<br>   Japanese Patent Office | Authorized officer |
| Facsimile No. | Telephone No. |

Form PCT/ISA/210 (second sheet) (July 1998)